# EUROPÄISCHE PATENTSCHRIFT

(11) **EP 2 406 310 B1**
(45) Veröffentlichungstag und Bekanntmachung des Hinweises auf die Patenterteilung: **15.05.2013**
(21) Anmeldenummer: 10707293.6
(22) Anmeldetag: 09.03.2010
(51) Int. Cl.: C08K 5/20, C09D 7/12, C08F 220/18, C08F 222/14, C09D 133/14

(54) **BINDEMITTEL FÜR BESCHICHTUNGEN MIT HOHER WASSERDAMPFDURCHLÄSSIGKEIT**
BINDERS FOR COATINGS, HAVING HIGH WATER VAPOR PERMEABILITY
LIANT POUR REVÊTEMENTS HAUTEMENT PERMÉABLES À LA VAPEUR D'EAU

(30) Priorität: 12.03.2009 EP 09154991
(43) Veröffentlichungstag der Anmeldung: 18.01.2012
(73) Patentinhaber: BASF SE, 67056 Ludwigshafen (DE)
(72) Erfinder: TERRENOIRE, Alexandre, 55576 Sprendlingen (DE); BALK, Roelof, 67459 Böhl-Iggelheim (DE); WIESE, Harm, 69514 Laudenbach (DE); TUCHBREITER, Arno, 67346 Speyer (DE); FRANCIS, Timothy, 68789 St. Leon-Rot (DE); SCHMIDT, Hans-Werner, 95444 Bayreuth (DE); BERNET, Andreas, 95440 Bayreuth (DE)
(86) Internationale Anmeldenummer: PCT/EP2010/052961
(87) Internationale Veröffentlichungsnummer: WO 2010/102993

(56) Entgegenhaltungen:
- EP-A1- 0 655 481
- EP-A2- 0 697 423
- DE-A1- 4 439 457

## Beschreibung

Die vorliegende Erfindung betrifft Bindemittel auf der Basis von Polymerisatdispersionen und Terephthalsäure-Bisamiden mit hoher Wasserdampfdurchlässigkeit, sowie deren Verwendung in Formulierungen insbesondere für Holzbeschichtungen.

Wichtige Anforderungen von Beschichtungssystemen sind zum einen eine gute Wasserfestigkeit und zum anderen eine ausreichende Wasserdampfdurchlässigkeit. Wasserfestigkeit bedeutet den Widerstand der Beschichtung gegen Aufnahme von Wasser zu erhöhen, da Wasser zur Erweichung der Beschichtung und zu einem Haftungsverlust zu Substrat führt und dieses somit dem Eindringen von Wasser ausgesetzt wird. Eine gute Wasserfestigkeit muss dieses jedoch verhindern. Tritt dennoch Feuchtigkeit in den Untergrund ein, so sollte eine ausreichende Durchlässigkeit der Beschichtung für Wasserdampf ein schnelles Rücktrocknen des Substrats garantieren. Also müssen Wasseraufnahme und Wasserdampfdurchlässigkeit (WDD) in einem ausgewogenen Verhältnis stehen (siehe H. Künzel, Beurteilung des Regenschutzes von Außenbeschichtungen, Institut für Bauphysik der Fraunhofer-Gesellschaft, Mitteilung 18, 1978). Basieren die Beschichtungen auf wässrigen Bindemitteln, wie Polymerisatdispersionen, so kommt der WDD des Dispersionsfilms im Wechselspiel mit seiner Wasserfestigkeit eine entscheidende Bedeutung zu.

Um eine gute Wasserfestigkeit und somit eine gute Witterungsbeständigkeit der Beschichtung zu erreichen sind im Allgemeinen die wässrigen Bindemittel so entwickelt, dass sie vorzugsweise auf hydrophoben Monomeren basieren und niedrige Anteile an hydrophilen Komponenten enthalten. Oftmals gilt aber, dass im direkten Vergleich hydrophile Systeme eine höhere WDD zeigen, als hydrophobe. Die Wasseraufnahme von hydrophilen Systemen ist allerdings höher. Für Holzbeschichtungen werden deswegen vorzugsweise eher hydrophobe Systeme eingesetzt, da insbesondere dieses Material aufgrund der chemischen Zusammensetzung - je nach Sorte - eine hohe Empfindlichkeit gegen Wasser aufweist und anfällig ist gegen Mikroorganismenbefall, insbesondere bei einem Holzfeuchtegehalt > 20%.

Wünschenswert wären deshalb Bindemittel mit sehr guter Wasserfestigkeit und gleichzeitig hoher WDD, damit ein schnelles Rücktrocknen des Substrats nach dem Beschichten garantiert ist und Feuchtestau unter der Beschichtung verhindert wird (J. Heinz, Holzschutz, ROTO Fachbibliothek, Bd. 2, 1998, Wegra Verlag und J. Sell et al., Werkstoff Holz, Spektrum der Wissenschaft, Nr. 4 (1997) 86 - 89).

Die WDD bei Holzlasuren lässt sich primär durch die Wahl des Bindemittels und die Trockenschichtdicke einstellen. Je höher die Schichtstärke, desto geringer die WDD. Man unterscheidet Dünn- und Dickschichtlasuren. Für Dünnschichtlasuren sind eine niedrige Viskosität und ein niedriger Feststoffgehalt (< 30%) charakteristisch. Mit derartigen Materialien stellt man Trockenschichtdicken bis zu 25 µm bei dreimaligem Auftrag ein. Dickschichtlasuren sind Lasuren mit einem hohen Bindemittelanteil und mit hoher Viskosität. Es werden Trockenschichtdicken von bis zu 120 µm angestrebt. Beiden Lasurtypen gemein ist der sehr hohe Bindemittelanteil. Die Bindemittelwahl hat daher einen entscheidenden Einfluss auf die WDD. Je polarer das Bindemittel ist, desto höher ist die WDD.

Emulgatoren, Pigmente und Additive beeinflussen die WDD im Vergleich zum Bindemittel nur gering. Auch hier gilt, je polarer, desto höher die WDD.

DE 44 39 457 offenbart wäßrige Polymerisatdispersionen, als Beschichtungsmittel, die ein dispergiertes Polymerisat A, das durch radikalische wäßrige Emulsionspolymerisation in zwei zeitlich aufeinanderfolgenden Stufen unterschiedlicher Monomerzusammensetzung erhältlich ist und Ureidogruppen aufweist und eine Polyaldehydverbindung enthält.

EP 0 655 481 offenbart wässrige Polymerdispersionen als Bindemittel für Beschichtungen, enthaltend selbstvernetzende wässrige Dispersionen, enthaltend mindestens ein Carbonylgruppen-haltiges weiches Latexpolymer und ein hartes Latexpolymer sowie mindestens ein polyfunktionelles Carbonsäurehydrazid.

EP 0 697 423 offenbart ein wässriges Polymer als Holzbeschichtungsmittel enthaltend ein Dihydrazid einer Carbonsäure.

Der vorliegenden Erfindung lag die Aufgabe zu Grunde, auf wässrigen Polymerisatdispersionen basierende Bindemittel mit sehr guter Wasserfestigkeit und gleichzeitig verbesserter Wasserdampfdurchlässigkeit zur Verfügung zu stellen.

Überraschenderweise wurde gefunden, dass Polymerisatdispersionen, die Terephthalsäure-bisamide der allgemeinen Formel I als Additive enthalten, sich gegenüber den Bindemitteln des Standes der Technik bei vergleichbarer kolloidaler Stabilität bei Formulierungen als Dispersionsfarben durch höhere Wasserdampfdurchlässigkeit auszeichnen.

Es ist seit längerem bekannt, dass aromatische und aliphatische Verbindungen mit Amid- und/oder Harnstoffeinheiten dazu in der Lage sind, sich in einem Lösungsmittel durch intermolekulare, nichtkovalente Wechselwirkungen zu anisotropen supramolekularen Aggregaten wie z. B. Band-, Stäbchen- oder Faserstrukturen zusammenzulagern [Weiss, R. G.; Terech, P. Molecular Gels: Materials with self-assembled fibrillar networks; Springer: Dordrecht, Neth.; 2006]. Ein Großteil der in der Literatur beschriebenen Systeme zeigt dieses Verhalten nur für organische und meist unpolare Lösungsmittel [ a) Terech, P; Weiss, R. G. Low molecular mass gelators of organic liquids and the properties of their gels. Chem. Rev. 1997, 97, 3133.; b) Sangeetha, N. M.; Maitra, U. Supramolecular gels: functions and uses. Chem. Soc. Rev. 2005, 34, 821; c) Hanabusa, K. Development of organogelators based on supramolecular chemistry. Springer Series in Materials Science (Macromolecular Nanostructured Materials) 2004, 78, 118-137; d) van Esch, J. H.; Feringa, B. L. New functional materials based on selfassembling organogels: from serendipity towards design. Angew. Chem. Int. Ed. 2000, 39, 2263]. In den letzten Jahren wurden jedoch intensive Anstrengungen unternommen, um für wässrige Lösungsmittel geeignete, strukturell verwandte Substanzklassen zu entwickeln. Die dadurch entdeckten Hydrogelatoren besitzen i. d. R. ebenfalls eine oder mehrere Amid- und/oder Harnstoffeinheiten [a) Estroff, L. A.; Hamilton, A. D. Water Gelation by Small Organic Molecules. Chem. Rev. 2004, 104, 1201; b) de Loos, M.; Feringa, B. L.; van Esch, J. H. Design and Application of Self-Assembled Low Molecular Weight Hydrogels. Eur. J. Org. Chem. 2005, 3615].

Es ist bekannt, dass Bisamide als Pigmentdispergator (JP 9272811-A), als Demulgator in Wasser-in-Öl Emulsionen (US 5,117,058) und als Kettenlängenregler in Polymerisationsreaktionen (DE-A 4040468, DE-A 4040469) eingesetzt werden können.

Der Einsatz von den bisher bekannten Verbindungen in wässrigen Polymerisatdispersionen führte allerdings zu Instabilität und Bildung von Koagulat - zurückzuführen auf eine Unverträglichkeit von diesen amphiphilen Verbindungen mit dem Stabilisierungssystem der Polymerisatdispersionen.

Überraschenderweise wurde nun aber gefunden, dass die anfangs genannten Bisamiden nicht nur verträglich mit den wässrigen Polymerisatdispersionen sind, sodern auch zu der erwähnten Verbesserung der WDD führen.

Ein erster Gegenstand der vorliegenden Erfindung sind wässrige Polymerisatdispersionen P enthaltend 0,1 bis 10 Gew.-% , bevorzugt 1 bis 5 Gew.-% Additive derallgemeinen Formel I 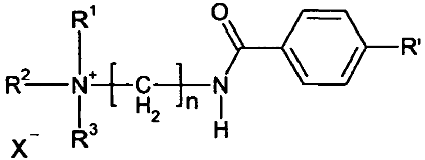 mit R¹ bis R⁶ = H, C₁-Cₙ-Alkyl , wobei R¹ bis R⁶ jeweils gleich oder verschieden sein können 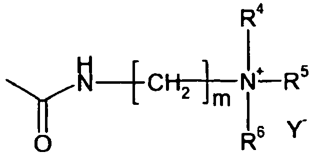 R'=
X, Y = Cl, Br, I
und n,m = 1 - 8
wobei die wässrige Polymerisatdispersion erhältlich ist durch radikalische wässrige Emulsionspolymerisation einer Monomermischung, enthaltend
a) 45 bis 70 Gew.-Teile wenigstens eines Monomers, dessen Homopolymerisat eine Glasübergangstemperatur T_{g} < 20°C aufweist,
b) 30 bis 55 Gew.-Teilen wenigstens eines Monomers, dessen Homopolymerisat eine Glasübergangstemperatur T_{g} > 50°C aufweist, sowie
c) 0 bis 30 Gew.-Teile weiterer Monomere.

Die erfindungsgemäßen wässrigen Polymerisatdispersionen eignen sich als Bindemittelzusammensetzungen zur Formulierung von Dispersionsfarben mit erhöhter Wasserdampfdurchlässigkeit.

Demzufolge betrifft ein weiterer Gegenstand der vorliegenden Erfindung die Verwendung einer wässrigen Polymerisatdispersion, wie zuvor definiert, als Bindemittelzusammensetzung, in Anstrichmitteln, insbesondere für Holzbeschichtungen, sowie Anstrichmittel enthaltend die erfindungsgemäßen Bindemittelzusammensetzung. Ein weiterer Gegenstand der Erfindung ist ein Holzbeschichtungsmittel enthaltend die erfindungsgemäße Polymerdispersion.

Bevorzugt weist das Bindemittel eine Mindestfilmbildetemperatur unterhalb von 10°C auf.

Mit der Glasübergangstemperatur T_{g} ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt; sie wird nach dem DSC-Verfahren ermittelt (Differential Scanning Calorimetry, 20 K/min, midpoint). Die T_{g}-Werte für die Homopolymerisate der meisten Monomeren sind bekannt und z.B. in Ullmann's Ecyclopedia of Industrial Chemistry, VCH Weinheim, 1992, Bd.5, Vol. A21, S. 169 aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989.

Die in den Bindemitteln enthaltenen Polymerisate sind zu 45 bis 70 Gew.-Teilen, vorzugsweise 50 bis 65 Gew.-Teilen aus Monomeren a) aufgebaut. Geeignete Monomere a) sind beispielsweise verzweigte und unverzweigte ethylenisch ungesättigte C₃-C₁₀-Olefine, C₁-C₁₀-Alkylacrylate, C₅-C₁₀-Alkylmethacrylate, C₅-C₁₀-Cycloalkyl-(meth)acrylate, C₁-C₁₀-Dialkylmaleinate und/oder C₁-C₁₀-Dialkylfumarate. Bevorzugt werden solche Monomere a) verwendet, deren Homopolymerisate Glasübergangstemperaturen unterhalb 0°C aufweisen. Insbesonders bevorzugt werden als Monomere a) Ethylacrylat, n-Propylacrylat, n-Butylacrylat, Isobutylacrylat, sec-Butylacrylat, n-Hexylacrylat, 2-Ethylhexylacrylat, n-Hexylmethacrylat, 2-Ethylhexylmethacrylat, oder 2-Propylheptylacrylat verwendet. Sie werden einzeln oder in Mischungen verwendet.

Die Homopolymerisate der Monomere b) haben eine Glasübergangstemperatur > 50° und bevorzugt > 80°, beispielsweise Styrol, α-Methylstyrol, o- oder p-Vinyltoluol, Vinylchlorid, Vinylidenchlorid, Acrylnitril, Methacrylnitril, sowie (C₁-C₄)-Alkylester oder - Cy-cloalkylester der Methacrylsäure, beispielsweise Methylmethacrylat, Cyclohexylmeth-acrylat, Isobornylmethacrylat und tert.-Butylmethacrylat. Sie werden einzeln oder in Mischungen in Mengen von 30 bis 55 Gew.-Teilen, und vorzugsweise 35 bis 50 Gew.-Teilen verwendet.

Die erfindungsgemäßen Bindemittelpolymerisate können weiterhin als Monomere c) ethylenisch ungesättigte Monomere, die anionische Gruppen bilden können enthalten. Bei diesen Gruppen handelt es sich vorzugsweise um Carboxylat-, Phosphonat- oder Sulfonatgruppen. Bevorzugte Monomere c) sind monoethylenisch ungesättigte Alkyl- oder Arylsulfonsäuren wie Vinylsulfonsäure, Methallylsulfonsäure, Vinylbenzolsulfonsäure, Acrylamidoethansulfonsäure, Acrylamidopropansulfonsäure, 2-Sulfoethyl(meth)-acrylat, Sulfopropyl(meth)acrylat sowie α,β-ungesättigte C₃-C₆-Carbonsäuren, α,β-ungesättigte C₄-C₈-Dicarbonsäuren oder deren Anhydride wie Acrylsäure, Methacrylsäure, Crotonsäure, Fumarsäure, Maleinsäure, Maleinsäureanhydrid, Itaconsäure und Itaconsäureanhydrid sowie die Alkalimetall- oder Ammoniumsalze der genannten Monomere, insbesondere deren Natriumsalze.

Desweiteren können als Monomere c) die Amide und die Hydroxyalkylester der α,β-ungesättigten C₃-C₆-Carbonsäuren, besonders bevorzugt Acrylamid, Methacrylamid, 2-Hydroxyethylacrylat, 2-Hydroxyethylmethacrylat, 2-Hydroxypropyl(meth)acrylat oder 1,4-Butandiolmonoacrylat eingesetzt werden.

Weitere geeignete Monomere c) sind N-Vinylpyrolidon, N-(2-Methacryloyloxyethyl)-ethylenharnstoff, N-(2-Acryloyloxyethyl)-ethylenharnstoff, 2-Acetoacetoxyethylacrylat, 2-Acetoacetoxyethylmethacrylat, Diacetonacrylamid.

Die Monomere c) können einzeln oder auch in Kombinationen von z.B. Säuren und Amiden eingesetzt werden.

Neben den genannten Monomeren a), b) und c) können die erfindungsgemäßen Bindemittelpolymerisate auch weitere Monomere enthalten, um den jeweiligen Beschichtungsmassen eine höhere Festigkeit zu verleihen. Diese Monomere weisen normalerweise wenigstens eine Epoxygruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylengly-koldiacrylat, 1,3-Propylenglykoldiacrylat, 1,3-Butylenglykoldiacrylat, 1,4-Butylenglykol-diacrylate, 1,6-Hexanglykoldiacrylat und Ethylenglykoldimethacrylat, 1,2-Propylenglykoldimethacrylat, 1,3-Propylenglykoldimethacrylat, 1,3-Butylenglykoldimethacrylat 1,4-Butylenglykoldimethacrylat, 1,6-Hexandiglycoldimethacrylat sowie Divinylbenzol, Vinylmethacrylat, Vinylacrylat, Allylmethacrylat, Allylacrylat, Diallylmaleat, Diallylfumarat, Cyclopentadienylacrylat, Triallylcyanurat oder Triallylisocyanurat. Weitere Beispiele für solche Monomere sind auch Siloxangruppen enthaltende Monomere, wie die Vinyltrialkoxysilane, z.B. Vinyltrimethoxysilan, Vinyltriethoxysilan, Alkylvinyldialkoxysilane oder (Meth)acryloxyalkyltrialkoxysilane, z.B. (Meth)acryloxyethyltrimethoxysilan, (Meth)acryloxypropyltrimethoxysilan zu nennen. Die genannten Monomere können in Mengen von 0,05 bis 1, vorzugsweise 0,05 bis 0,5 Gew.-Teilen, bezogen auf 100 Gew.-Teile Monomere a) plus b) verwendet werden.

Die Herstellung der als Additiv eingestzten Terephthalsäure-Bisamide erfolgt durch die Umsetzung von Terephthalsäuredihalogeniden mit (N,N-Dialkylamino-)alkylaminen im molaren Verhältnis 1:2 , bevorzugt in Tetrahydrofuran (THF) oder Mischungen von THF und anderen organischen Lösemitteln, wie Dichlormethan bei Raumtemperatur. Die Reaktion kann aber auch in Substanz oder in anderen Lösungsmitteln- oder Lösungsmittelgemischen ohne THF-Anteil, beispielsweise in Toluol, Aceton, Dichlormethan oder Chloroform durchgeführt werden.
Bevorzugt werden die Additive in Mengen von 0,1 bis 10 Gew.-%, besonders bevorzugt von 1 bis 5 Gew.-% eingesetzt.

Bevorzugt wird wenigstens ein Additiv der allgemeinen Formel I vor, während oder nach der Polymerisation zugegeben.

Die als erfindungsgemäße Bindemittel verwendeten wässrigen Polymerisatdispersionen werden durch radikalische Emulsionspolymerisation der genannten Monomere a) bis c) in Gegenwart von 0,1 bis 0,5 Gew.-%, vorzugsweise 0,1 bis 0,4 Gew.-% und insbesondere 0,1 bis 0,3 Gew.-%, jeweils bezogen auf die Menge der Monomere a) und b), wenigstens eines radikalischen Polymerisationsinitiators durchgeführt.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, Hydroperoxide, z.B. Alkylimetallperoxodisulfate als auch um Azoverbindungen handeln. Auch werden kombinierte Systeme verwendet, die aus wenigstens einem organischen Reduktionsmittel und wenigstens einem Peroxid und/oder Hydroperoxid zusammengesetzt sind, z.B. tert.-Butylhydroperoxid mit dem Natriumsalz der Hydroxymethansulfonsäure, Wasserstoffperoxid mit Ascorbinsäure oder Natriumperoxodisulfat mit Natriumdisulfit. Bevorzugte kombinierte Systeme enthalten darüber hinaus eine geringe Menge einer im Polymerisationsmedium löslichen Metallverbindung, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid tert.-Butylhydroperoxid oder Alkaliperoxodisulfate und/oder Ammoniumperoxodisulfat verwendet werden. Anstelle eines wasserlöslichen Eisen(II)-Salzes wird häufig eine Kombination aus wasserlöslichen Eisen- und Vanadium-Salzen benutzt. Bevorzugte Initiatoren sind die Ammonium- oder Alkalimetallsalze von Peroxosulfaten oder Peroxodisulfaten, insbesondere Natrium- oder Kaliumperoxodisulfat.

Für die Herstellung der erfindungsgemäßen Bindemittelpolymerisate wird gegebenenfalls neben den für eine Emulsionspolymerisation üblichen oberflächenaktiven Substanzen wenigstens ein nichtionischer Emulgator in Mengen von vorzugsweise 0,5 bis 10 Gew.-%, insbesondere 1 bis 8 Gew.-% und besonders bevorzugt 2 bis 4 Gew.-%, jeweils bezogen auf die Gesamtmonomermenge verwendet. Brauchbare nichtionische Emulgatoren sind aromatische oder aliphatische nichtionische Emulgatoren, beispielsweise ethoxylierte Mono-, Di- und Trialkylphenole (EO-Grad: 3 bis 50, Alkylrest: C₄-C₉), Ethoxylate langkettiger Alkohole (EO-Grad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylrest C₁₀-C₂₂, mittlerer Ethoxylierungsgrad 10 bis 50) und darunter besonders bevorzugt solche mit einem linearen C₁₂-C₁₈-Alkylrest und einem mittleren Ethoxylierungsgrad 10 bis 50 als alleinige, nichtionische Emulgatoren verwendet.

Weitere gebräuchliche Emulgatoren sind vorzugsweise anionischer Natur. Hierzu zählen Alkali- und Ammoniumsalze von Alkylsulfaten (Alkylrest: C₈-C₁₂), von Schwefelsäurehalbestern ethoxylierter Alkanole (EO-Grad: 2 bis 50, Alkylrest: C₁₂ bis C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192-208).

Bevorzugte anionische grenzflächenaktive Substanzen sind auch Verbindungen der folgenden allgemeinen Formel 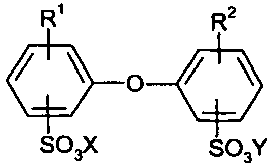 worin R¹ und R² Wasserstoff oder C₄-C₂₄-Alkyl bedeuten und nicht gleichzeitig Wasserstoff sind, und X und Y Alkalimetallionen und/oder Ammoniumionen sein können. In der Formel I bedeuten R¹ und R² bevorzugt lineare oder verzweigte Alkylreste mit 6 bis 18 C-Atomen oder Wasserstoff, und insbesondere mit 6, 12 und 16 C-Atomen, wobei R¹ und R² nicht beide gleichzeitig Wasserstoff sind. X und Y sind bevorzugt Natrium, Kalium oder Ammonium, wobei Natrium besonders bevorzugt ist. Besonders vorteilhaft sind Verbindungen I, in denen X und Y Natrium, R¹ ein verzweigter Alkylrest mit 12 C-Atomen und R² Wasserstoff oder gleich R¹ ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company). Die Verbindungen sind allgemein bekannt, z.B. aus der US-A 4,269,749, und im Handel erhältlich.

Weitere geeignete Emulgatoren finden sich beispielsweise in Houben-Weyl, Methoden der organischen Chemie, Band 14/1, Makromolekulare Stoffe, Georg Thieme Verlag, Stuttgart, 1961, S. 192 bis 208.

Geeignete Emulgatoren sind kommerziell erhältlich, beispielsweise unter den Handelsbezeichnungen Dowfax^{®}2 A1, Emulan^{®} NP 50, Dextrol^{®}OC 50, Emulgator 825, Emulgator 825 S, Emulan^{®}OG, Texapon^{®} NSO, Nekanil^{®} 904 S, Lumiten^{®} 1-RA, Lumiten^{®} I-SC, Lumiten^{®} E 3065, Disponil^{®} FES 77, Lutensol^{®} AT 18, Steinapol^{®} VSL, Emulphor^{®} NPS 25.

Darüber hinaus können geeignete Schutzkolloide, wie beispielsweise Polyvinylalkohole, Cellulosederivate oder Vinylpyrolidon enthaltende Copolymerisate eingesetzt werden. Eine ausführliche Beschreibung weiterer geeigneter Schutzkolloide findet sich in Houben-Weyl, Methoden der Organischen Chemie, Bd. 14/1, Makromolekulare Stoffe, Georg-Thieme-Verlag, Stuttgart, 1961, S. 411-420. Die Gesamtmenge an grenzflächenaktiven Substanzen macht üblicherweise bis zu 30 Gew.-%, vorzugsweise 0,5 bis 10 Gew.-% und besonders bevorzugt 2 bis 6 Gew.-%, bezogen auf die zu polymerisierenden Monomere aus.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z.B. organische Thioverbindungen oder Allylalkohole, eingestellt werden. Bevorzugt werden jedoch solche Polymerisate, die in Abwesenheit solcher Verbindungen hergestellt wurden.

Die Emulsionspolymerisation kann sowohl kontinuierlich als auch nach der Batch-Fahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugefügt werden. Bevorzugt ist ein Zulaufverfahren mit kurzen Zulaufzeiten, d.h. die Monomere werden, vorzugsweise als wässrige Emulsion, dem Reaktionsansatz innerhalb von 1 bis 4 Stunden, vorzugsweise innerhalb von 1,5 bis 3 Stunden zudosiert.

Neben der saatfreien Herstellungsweise kann zur Einstellung der Polymerteilchengröße die Emulsionspolymerisation nach dem Saatlatex-Verfahren oder in Gegenwart eines in situ hergestellten Saatlatex erfolgen. Verfahren hierzu sind bekannt und können dem Stand der Technik entnommen werden (siehe EP-B 40 419 sowie 'Encyclopedia of Polymer Science and Technology', Vol. 5, John Wiley & Sons Inc., New York, 1966, S. 847).

So empfiehlt der Stand der Technik, beim Zulaufverfahren eine definierte feinteilige Saat-Polymerisatdispersion im Polymerisationsgefäß vorzulegen und dann die Monomere in Gegenwart der Saat zu polymerisieren. Hierbei wirken die Saat-Polymerisatteilchen als 'Polymerisationskeime' und entkoppeln die Polymersatteilchenbildung und das Polymerisatteilchenwachstum. Während der Emulsionspolymerisation kann weitere Saatdispersion zugegeben werden. Hierdurch werden breite Größenverteilungen der Polymerisatteilchen erreicht, die insbesondere bei Polymerdispersionen mit hohem Feststoffgehalt oftmals erwünscht sind (vgl. DE-A 42 13 965). Anstelle der Zugabe eines definierten Saatlatex kann dieser auch in situ erzeugt werden. Hierzu wird beispielsweise ein Teil der Monomere und des Initiators zusammen mit Emulgator vorgelegt und auf Reaktionstemperatur erwärmt, wobei ein relativ feinteiliger Latex entsteht. Anschließend wird im gleichen Polymerisationsgefäß die eigentliche Polymerisation nach dem Zulaufverfahren durchgeführt (siehe auch DE-A 42 13 965).

Die Art und Weise, wie der Initiator der Emulsionspolymerisation zudosiert ist, ist nicht kritisch. Der Initiator kann sowohl vollständig im Polymerisationsgefäß vorgelegt oder aber, nach Maßgabe seines Verbrauchs, im Verlauf der Emulsionspolymerisation kontinuierlich oder stufenweise zugesetzt werden. Die Vorgehensweise hängt sowohl von der chemischen Natur des Initiators als auch von der Polymerisationstemperatur ab und kann vom Fachmann je nach Bedarf gewählt werden. Bevorzugt wird eine kontinuierliche oder stufenweise Zudosierung zum Reaktionsansatz.

Polymerisationsdruck und Polymerisationstemperatur sind gleichfalls von untergeordneter Bedeutung. Im Allgemeinen arbeitet man bei Temperaturen zwischen Raumtemperatur und 120°C. vorzugsweise bei Temperaturen von 50 bis 95°C und besonders bevorzugt zwischen 70 und 90°C.

Im Anschluss an die eigentliche Polymerisationsreaktion ist es in der Regel erforderlich, die erfindungsgemäßen wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden.

Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Als Oxidationsmittel zur redoxinitiierten Nachpolymerisation eignen sich insbesondere Wasserstoffperoxid, tert.-Butylhydroperoxid, Cumolhydroperoxid oder Alkaliperoxidsulfate. Geeignete Reduktionsmittel sind Natriumdisulfit, Natriumhydrogensulfit, Natriumdithionit, Natriumhydroxymethansulfinat, Formamidinsulfinsäure, Acetonbisulfit (= Natriumhydrogensulfit-Additionsproduckt an Aceton), Ascorbinsäure bzw. reduzierend wirkende Zuckerverbindungen, oder wasserlösliche Mercaptane, wie Mercaptoethanol. Die Nachpolymerisation mit dem Redoxinitiatorsystem wird im Temperaturbereich von 10 bis 100°C, vorzugsweise bei 20 bis 90°C durchgeführt. Die Redoxpartner können der Dispersion unabhängig voneinander vollständig, portionsweise bzw. kontinuierlich über einen Zeitraum von 10 Minuten bis 4 Stunden zugegeben werden. Zur Verbesserung der Nachpolymerisationswirkung der Redoxinitiatorsysteme können der Dispersion auch lösliche Salze von Metallen wechselnder Wertigkeit, wie Eisen-, Kupfer oder Vanadiumsalze, zugesetzt werden. Häufig werden auch Komplexbildner zugegeben, die die Metallsalze unter den Reaktionsbedingungen in Lösung halten.

Die Polymerisatdispersion werden abschliessend.mit einer Base neutralisiert, wie Alkali- oder Erdalkalimetallhydroxyden, Erdalkalimetalloxyden oder flüchtige oder nichtflüchtige Aminen. Zu den nichtflüchtigen Aminen zählen insbesondere ethoxylierte Diamine oder Polyamine, wie sie z.B. unter dem Namen Jeffamine^{®} (Texaco Chemical Co.) kommerziell erhältlich sind.

Die erfindungsgemäßen Additive mit der allgemeinen Formel I können vor, während oder nach der Polymerisation zugegeben werden, entweder als reine Substanz oder als wässrige Lösung. Bevorzugt werden sie nach der eigentlichen Polymerisation zugegeben.

Die erfindungsgemäßen Bindemittelpolymerisate weisen in der Regel Mindestfilmbildetemperaturen unterhalb 10°C, bevorzugt unterhalb 5°C, und besonders bevorzugt < 3°C auf. Die über Lichtstreuung ermittelte mittlere Teilchengröße der in den Bindemitteldispersionen enthaltenen Polymerisatteilchen liegt vorzugsweise im Bereich von 50 bis 300 nm, besonders bevorzugt im Bereich von 50 bis 200 nm.

Die Lichtdurchlässigkeit (s.u.) der Dispersionen liegt in der Regel im Bereich von 40 bis 95 %, vorzugsweise im Bereich von 50 bis 95 %. Sie korreliert über weite Bereiche mit der Größe der dispergierten Teilchen, d.h. je größer der LD-Wert (Lichtdurchlässigkeit einer 0,01 Gew.%igen Probe), desto geringer ist der Durchmesser der dispergierten Teilchen.

Die Anstrichmittelformulierungen können neben den Bindemittelzusammensetzungen weitere Zusatzstoffe enthalten, wie sie in Anstrichmitteln auf Basis wässriger Polymerdispersionen üblich sind. Hierzu zählen Pigmente, Füllstoffe, weitere Hilfsmittel und gegebenenfalls zusätzliche filmbildende Polymere.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Rhopaque®-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, und Siliciumdioxid. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Zu den üblichen Hilfsmitteln zählen, neben den bei der Polymerisation eingesetzten Emulgatoren, auch Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-%, bezogen auf den Feststoffgehalt des Anstrichmittels.

Der Anteil der Pigmente kann durch die Pigmentvolumenkonzentration (PVK) beschrieben werden. Die PVK beschreibt das Verhältnis des Volumens an Pigmenten (V_{P}) und Füllstoffen (V_{F}) zum Gesamtvolumen, bestehend aus den Volumina an Bindemittel (V_{B}), Pigmenten und Füllstoffen eines getrockneten Beschichtungsfilms in Prozent: PVK = (V_{P} + V_{F}) x 100 / (V_{P} + V_{F} + V_{B}) (vgl. Ullmann's Enzyklopädie der technischen Chemie, 4. Auflage, Band 15, S. 667). Anstrichmittel lassen sich anhand der PVK beispielsweise wie folgt einteilen:

| | |
|---|---|
| hochgefüllte Innenfarbe, waschbeständig, weiß/matt | ca. ≥85 |
| Innenfarbe, scheuerbeständig, weiß/matt | ca. 60-85 |
| Halbglanzfarbe, seidenmatt | ca. 30-60 |
| Halbglanzfarbe, seidenglänzend | ca. 25-35 |
| Hochglanzfarbe | ca. 15-25 |
| Außenfassadenfarbe, weiß | ca. 45-55 |
| Klarlack | 0 |

Die erfindungsgemäßen Anstrichmittel können beispielsweise in Form eines unpigmentierten Systems (Klarlacks) oder eines pigmentierten Systems vorliegen.

Die aus den erfindungsgemäßen Anstrichmitteln hergestellten Anstriche zeichnen sich durch eine hohe Wasserfestigkeit und gleichzeitig gute WDD bei guter Haftung aus. Die besagten Anstriche weisen zudem im Allgemeinen eine hohe Flexibilität und eine geringe Brüchigkeit auf, die es ihnen z. B. ermöglicht, sich einem arbeitenden Untergrund anzupassen.

Die im Folgenden angegebenen Beispiele sollen die Erfindung erläutern, ohne sie jedoch einzuschränken.

### Beispiele

### Analytik

Die Teilchengrösse (Z-Mittelwert) der Polymerisatteilchen wurde durch dynamische Lichtstreuung an einer 0,01 gew.%igen Dispersion bei 23°C mittels eines Autosizer IIc der Fa. Malvern Instruments, England, ermittelt. Angegeben wird der mittlere Durchmesser der Kumulantenauswertung (cumulant z-average) der gemessenen Autokorrelationsfunktion.

Die Lichtdurchlässigkeit (LD-Wert) wurde an einer 0,01 Gew.-%igen Dispersion bei einer Schichtdicke von 25 mm mit weißem Licht in einem handelsüblichen Photometer ermittelt. Gemessen wird relativ zu Wasser, dem ein LD-Wert von 100 % zugeordnet wird.

Die Bestimmung der Mindestfilmbildetemperatur (MFT) erfolge in Anlehnung an Ullmanns Enzyklopädie der technischen Chemie, 4. Aufl., Bd. 19, Verlag Chemie, Weinheim (1980), S. 17. Als Meßgerät diente eine Filmbildebank (Metallplatte, an die ein Temperaturgradient angelegt wird). Die Verfilmung erfolgte bei einer Naßschichtdicke von 1 mm. Als Mindesifilmbildetemperatur wird die Temperatur angegeben, bei der der Film beginnt, rissig zu werden.

Die Wasserdampfdurchlässigkeit (WDD) der freien Dispersionsfilme wurde bei 23°C und 85% relativer Luftfeuchte mit einem MOCON PERMATRAN-W®3/33 Meßgerät gemessen, basierend auf der Trägergas-Methode laut ASTM F-1249. Die gemessenen Transmissionsraten wurden anschließend nach 98% relativer Luftfeuchte umgerechnet, angenommen dass diese Rate linear zunimmt mit steigender Luftfeuchte.
Die WDD der Filme wurde auch laut ASTM E 96 / E 96M - 05 mit einem Klimaschrank (Marke Vötsch VC 7060) bei 23°C und einer relativen Luftfeuchte von 98% gemessen. Es wurden jeweils 3 Testkörper pro Probe vermessen. Als Trocknungsmittel wurde Calciumchloridanhydrid und als Abdichtungsmittel Paraffin Wachs verwendet.

Die WDD von Beschichtungsformulierungen wurde geprüft laut prEN 1062-2 und ISO DIS 7783. Die Methode beschreibt das sogenannte Cup-Verfahren, nach der die WDD gravimetrisch bestimmt wird. Die Messungen erfolgten bei einem Feuchtegefälle von den 50% zu 93% relativer Luftfeuchte und bei 23°C. Es wurden von jeder Beschichtung mindestens 3 Parallelproben geprüft sowie ein Blindwert des Untergrundes ebenfalls an 3 Parallelproben. Als Substrat wurde Bristolkarton HF glatt weiss, Typ A 21717verwendet, erhältlich bei Fa. CIT Büro Schule, Hamburg.

### 1. Allgemeine Vorschrift zur Herstellung der Verbindung der allgemeinen Formel I

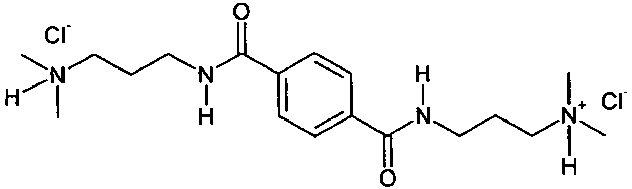

Die Herstellung dieser Verbindungsgruppe erfolgt analog der Vorschrift für Additiv 1.

### Additiv 1

Terephthalsäuredichlorid (13,98 g; 1,0 Äquivalente) wurde in ein Dichlormethan / Tetrahydrofuran Gemisch (200ml/50ml) gelöst. Unter Eisbad-Kühlung wurde anschließend langsam 3-N,N-Dimethylaminopropylamin (14,07 g; 2,0 Äquivalente) zugetropft. Es wurde 30 min bei 0 °C und 2 h bei RT gerührt. Die Verbindung wurde mit Hexan (ca. 400 ml) ausgefällt, anschließend abfiltriert über Glasfilter und am Rotationsverdampfer getrocknet (50-80 mbar, 65 °C, 30-45 min). Es erfolgte eine Nachtrocknung über Nacht im Hochvakuum bei Raumtemperatur.

Die Verbindung wurde charakterisiert per ¹H-NMR (Proton-Nuklear Magnetische Resonanz Spektroskopie) in Dimethylsulfoxid-d₆ und mit thermischen Analysetechniken (Differentialkalorimetrie und Thermogravimetrie).
Ausbeute: 27,8 g feines weißes Pulver (99 %), leicht hygroskopisch.

### 2. Vorschrift zur Herstellung der Bindemittelpolymerisate

### Beispiel 1

In ein Polymerisationsgefäß mit Rührer und Rückflußkühler wurden

| | |
|---|---|
| 201,0 g | entionisiertes Wasser, und |
| 3,3 g | einer 20 Gew.-%igen Lösung von Natriumdodecylbenzylsulfonat |

vorgelegt und unter Rühren auf 95°C erhitzt. Dann wurden 32,8 g von Zulauf 1 und 10 min später 10,9 g von Zulauf 2 zugegeben und 5 min bei dieser Temperatur gerührt. Unter Beibehaltung der Temperatur wurden, gleichzeitig beginnend, der Rest von Zulauf 1 und der Rest von Zulauf 2 innerhalb 150 min dem Polymerisationsansatz kontinuierlich zudosiert. Nach Beendigung von Zulauf 1 und 2 wurde mit 7,2 g entionisiertem Wasser gespült und man ließ den Ansatz 15 min nachpolymerisieren. Während dessen wurde die Temperatur auf 90°C eingestellt. Danach wurde 6,8 g einer 9,5 Gew.-%igen Lösung von Ammoniak in 15 min zudosiert. Dann dosierte man während einer Stunde parallel 9,8 g einer 4 Gew.-%igen wässrigen t-Butylhydroperoxidlösung und 14,3 g einer 4,6 Gew.-%igen wässrigen Lösung von Acetonbisulfit zu. Anschließend rührte man den Reaktionsansatz noch 15 min nach, gab 38 g entionisiertem Wasser zu kühlte auf Raumtemperatur ab, stellte mit 22,6 g einer 5 Gew.-%iger wässriger Natronlauge einen pH-Wert von 8,5 ein und filtrierte durch einen Filter mit 125 µm Maschenweite.
Man erhielt 1276,7 g einer 51,2 Gew.-%igen Dispersion mit einem pH-Wert von 8,4, einem LD-Wert von 81% und einer Teilchengröße von 166 nm. Der MFT war 1°C.

### Zulauf 1

| | |
|---|---|
| 8,7 g | Dowfax^{®} 2A1 in Form einer 45 Gew.-%igen wässrigen Lösung |
| 26,0 g | Lutensol^{®} TO 82 in Form einer 20 Gew.-%igen wässrigen Lösung |
| 8,5 g | Acrylsäure (Monomer c) |
| 19,5 g | einer 50 Gew.-%igen wässrigen Lösung von Acrylamid (Monomer c) |
| 357,5 g | n-Butylacrylat (Monomer a) |
| 274,3 g | Methylmethacrylat (Monomer b) |
| 248 g | Wasser |

### Zulauf 2

| | |
|---|---|
| 0,8 g | Natriumperoxodisulfat |
| 30,4 g | Wasser |

### Beispiel 2

In ein Polymerisationsgefäß mit Rührer und Rückflußkühler wurden

| | |
|---|---|
| 241,6 g | entionisiertes Wasser, und |
| 3,4 g | einer 31 Gew.-%igen Lösung von Emulphor^{®} NPS 25 |
| 30,0 g | einer 20 Gew.-%igen Lösung von Emulgator^{®} 825 |

vorgelegt und unter Rühren auf 95°C erhitzt. Dann wurden zeitgleich Zulauf 1 und 2 gestartet. Zulauf 1 wurde innerhalb 240 min und Zulauf 2 innerhalb 270 min dem Polymerisationsansatz kontinuierlich zudosiert. Nach Beendigung von Zulauf 2 ließ man den Ansatz noch 30 min nachpolymerisieren. Danach wurde 19,4 g einer 6,9 Gew.-%igen Lösung von Ammoniak in 10 min zudosiert. Dann dosierte man während einer Stunde parallel 4,6 g einer 10 Gew.-%igen wässrigen t-Butylhydroperoxidlösung und 17,0 g einer 2,1 Gew.-%igen wässrigen Lösung von Ascorbinsäure zu. Anschließend wurde noch 3,7 g einer 3,4 Gew.-%igen wässrigen Lösung von Wasserstoffperoxid zugegeben und rührte man den Reaktionsansatz noch 30 min nach. Dann kühlte man den Ansatz auf Raumtemperatur ab und filtrierte ihm durch einen Filter mit 125 µm Maschenweite.
Man erhielt 1185,1 g einer 51,3 Gew.-%igen Dispersion mit einem pH-Wert von 8,1, einem LD-Wert von 91% und einer Teilchengröße von 100 nm. Der MFT war 5°C.

### Zulauf 1

| | |
|---|---|
| 8,6 g | Emulphor^{®} NPS in Form einer 31 Gew.-%igen wässrigen Lösung |
| 14,0 g | Natriumlaurylsulfat in Form einer 15 Gew.-%igen wässrigen Lösung |
| 6,0 g | Acrylsäure (Monomer c) |
| 20,2 g | einer 50 Gew.-%igen wässrigen Lösung von Acrylamid (Monomer c) |
| 319,9 g | n-Butylacrylat (Monomer a) |
| 264,0 g | Methylmethacrylat (Monomer b) |
| 195,2 g | Wasser |

### Zulauf 2

| | |
|---|---|
| 1,9 g | Natriumperoxodisulfat |
| 35,6 g | Wasser |

### Beispiel 3

In ein Polymerisationsgefäß mit Rührer und Rückflußkühler wurden

| | |
|---|---|
| 156,0 g | entionisiertes Wasser, und |
| 26,0 g | einer 33 Gew.-%igen Polystyrol-Saatdispersion mit einer Teilchengröße von 30 nm |

vorgelegt und unter Rühren auf 82°C erhitzt. Dann wurden 4,3 g von Zulauf 2 zugegeben und 5 min bei dieser Temperatur gerührt. Unter Beibehaltung der Temperatur wurden, gleichzeitig beginnend, Zulauf 1 und der Rest von Zulauf 2 innerhalb 180 min dem Polymerisationsansatz kontinuierlich zudosiert. Nach Beendigung von Zulauf 1 und 2 ließ man den Ansatz 15 min nachpolymerisieren. Danach wurde 22,2 g einer 4,9 Gew.-%igen Lösung von Ammoniak zugegeben. Dann dosierte man während einer Stunde parallel 6,0 g einer 10 Gew.-%igen wässrigen t-Butylhydroperoxidlösung und 18,4 g einer 2,0 Gew.-%igen wässrigen Lösung von Ascorbinsäure zu. Anschließend gab man 5,2 g einer 5 Gew.-%igen Wasserstofperoxidlösung zu, stellte mit 10,7 g einer 17 Gew.-%igen Ammoniaklösung den End-pH bei 80°C auf 7,8 - 8,5, kühlte den Ansatz auf Raumtemperatur ab und filtrierte durch einen Filter mit 125 µm Maschenweite. Man erhielt 1242,6 g einer 50,3 Gew.-%igen Dispersion mit einem pH-Wert von 7,8, einem LD-Wert von 77% und einer Teilchengröße von 156 nm. Der MFT war 8°C.

### Zulauf 1

| | |
|---|---|
| 30,0 g | Emulan^{®} OG in Form einer 20 Gew.-%igen wässrigen Lösung |
| 40,0 g | Disponil^{®} FES 77 in Form einer 30 Gew.-%igen wässrigen Lösung |
| 17,9 g | Acrylsäure (Monomer c) |
| 20,4 g | einer 50 Gew.-%igen wässrigen Lösung von Acrylamid (Monomer c) |
| 333,1 g | n-Butylacrylat (Monomer a) |
| 238,8 g | Styrol (Monomer b) |
| 300,8 g | Wasser |

### Zulauf 2

| | |
|---|---|
| 1,2 g | Natriumperoxodisulfat |
| 15,9 g | Wasser |

### Beispiel 4

In ein Polymerisationsgefäß mit Rührer und Rückflußkühler wurden

| | |
|---|---|
| 217,6 g | entionisiertes Wasser, und |
| 11,6 g | einer 33 Gew.-%igen Polystyrol-Saatdispersion mit einer Teilchen größe von 30 nm |

vorgelegt und unter Rühren auf 85°C erhitzt. Dann wurden 4,8 g von Zulauf 2 zugegeben und 5 min bei dieser Temperatur gerührt. Unter Beibehaltung der Temperatur wurden, gleichzeitig beginnend, Zulauf 1 und der Rest von Zulauf 2 innerhalb 180 min dem Polymerisationsansatz kontinuierlich zudosiert. Nach Beendigung von Zulauf 1 und 2 ließ man den Ansatz 30 min nachpolymerisieren. Dann dosierte man während einer Stunde parallel 12,0 g einer 10 Gew.-%igen wässrigen t-Butylhydroperoxidlösung und 15,6 g einer 8,1 Gew.-%igen wässrigen Lösung von Acetonbisulfit zu. Danach wurde den Ansatz auf 60°C abgekühlt und es wurde 12,0 g einer 10 Gew.-%igen Lösung von Natronlauge in 60 min zudosiert. Nach kühlen auf Raumtemperatur wurden anschließend 2 g einer 12 Gew.-%igen wässrigen Lösung von Adipinsäuredihydrazid und 2,4 g einer 5 Gew.-%igen Wasserstofperoxidlösung zugegeben und filtrierte man den Ansatz durch einen Filter mit 125 µm Maschenweite.
Man erhielt 1265,9 g einer 50,1 Gew.-%igen Dispersion mit einem pH-Wert von 8,3, einem LD-Wert von 56% und einer Teilchengröße von 140 nm. Der MFT war 3°C.

### Zulauf 1

| | |
|---|---|
| 31,6 g | Natriumlaurylsulfat in Form einer 15 Gew.%igen wässrigen Lösung |
| 10,5 g | Dowfax^{®} 2A1 in Form einer 45 Gew.%igen wässrigen Lösung |
| 82,5 g | Lutensol^{®} TO 82 in Form einer 20 Gew.-%igen wässrigen Lösung |
| 1,7 g | Acrylsäure (Monomer c) |
| 17,6 g | einer 50 Gew.-%igen wässrigen Lösung von Acrylamid (Monomer c) |
| 353,6 g | n-Butylacrylat (Monomer a) |
| 235,8 g | Styrol (Monomer b) |
| 211,4 g | Wasser |

### Zulauf 2

| | |
|---|---|
| 1,2 g | Natriumperoxodisulfat |
| 46,8 g | Wasser |

### 3. Herstellung der modifizierte Latexfilme

Das Additiv 1 wurde in den gewünschten Mengen in die unverdünnten Dispersionen eingerührt bis zur kompletten Lösung. Die Filme wurden mit Hilfe eines BYK-Gardner® Filmrakel auf Polyethylen-Folie aufgezogen, 24 Stunden unter Laboratoriumbedingungen getrocknet und anschließend 2 Tage bei 60°C gelagert.

**Tabelle 1: WDD-Werte für freie Dispersionsfilme**

| Dispersion | Eingesetzte Menge Additiv 1 | WDD laut ASTM E 96 / E 96M - 05 | WDD laut ASTM F - 1249 |
|---|---|---|---|
| | Gew.-% | g.m/(m².d.bar) | g.m/(m².d.bar) |
| Beispiel 1 | 0 | 0,405 (± 0,026) | 0,355 (t 0,019) |
| | 1,0 | 0,412 (± 0,050) | - |
| | 1,7 | - | 0,345 (± 0,018) |
| | 2,5 | 0,455 (± 0,003) | - |
| Beispiel 3 | 0 | 0,316 (± 0,027) | 0,272 (± 0,007) |
| | 1,0 | 0,326 (± 0,029) | 0,354 (± 0,008) |
| | 1,7 | 0,353 (± 0,011) | - |
| | 2,5 | 0,436 (t 0,015) | 0,521 (± 0,151) |

Die Ergebnisse zeigen insbesondere eine Verbesserung der WDD für die etwas hydrophobere Styrol/Acrylat-Dipersion (Beispiel 3) und einen signifikanten Effekt bei Verwendung von 2,5 Gew.-% Additiv 1.

### 4. Herstellung der Formulierungen für Beschichtungen

Es wurden Formulierungen mit und ohne Additiv 1 hergestellt. Dazu wurden ein wässriges Reinacrylat- und ein Styrolacrylatbindemittel verwendet.
Es wurden Beschichtungen auf den genannten Substraten durch Aufzug van 300 µm nass hergestellt und die WDD wurden nach einer Trocknung und Lagerung von 28 Tage im Normklima (23°C, 50% relative Luftfeuchte) gemessen wie oben beschrieben. Durch den Einsatz von 3 Gew.-% Additiv 1 in der Formulierung konnte die WDD in beiden Fällen verbessert werden.

**Tabelle 2: Fomulierungen (alle Angaben in g)**

| | Konzentration | Beispiel 2 | | Beispiel 4 | |
|---|---|---|---|---|---|
| | (Gew.-%) | | Mit Additiv 1 | | Mit Additiv 1 |
| Entionisiertes Wasser | - | 75 | 75 | 75 | 75 |
| AMP^{®} 90 | 90 | 1,2 | 1,2 | 1,2 | 1,2 |
| Byk^{®} 346 | 45 | 0,6 | 0,6 | 0,6 | 0,6 |
| Tego Airex^{®} 901 | 100 | 1,5 | 1,5 | 1,5 | 1,5 |
| Dow Corning^{®} 51 | 80 | 0,9 | 0,9 | 0,9 | 0,9 |
| Solvenon^{®} DPM | - | 10,5 | 10,5 | 10,5 | 10,5 |
| Tinuvin^{®} 1130 | 100 | 3 | 3 | 3 | 3 |
| Beispiel 2 | 51,3 | 105 | 105 | - | - |
| Beispiel 4 | 50,1 | - | - | 105 | 105 |
| Acematt^{®} TS 100 | 100 | 4,5 | 4,5 | 4,5 | 4,5 |
| Additiv 1 | 99 | - | 8,8 | - | 8,8 |
| Collacral^{®} PU 75 | 24-28 | 3,5 | 3,5 | 7 | 7 |
| Beispiel 2 | 51,3 | 70,5 | 70,5 | - | - |
| Beispiel 4 | 50,1 | - | - | 70,5 | 70,5 |
| Viscoatex^{®} 730 | 30 | 0,2 | 0,2 | 1,2 | 1,4 |
| Tego Foamex^{®} 810 | 100 | 1,5 | 1,5 | 1,5 | 1,5 |
| Entionisiertes Wasser | - | 22,1 | 13,3 | 17,6 | 8,6 |

**Tabelle 3: WDD-Werte der Beschichtungen**

| Beschichtung auf Basis von | Eingesetzte Menge Additiv 1 | WDD laut prEN 1062-2 und ISO DIS 7783 |
|---|---|---|
| | Gew.-% | g/(m².d) |
| Beispiel 2 | 0 | 124 (± 12) |
| | 2,5 | 138 (± 5) |
| Beispiel 4 | 0 | 117 (± 28) |
| | 2,5 | 144 (± 21) |

Die Ergebnisse zeigen dass die unmodifizierte Acrylat-basierende Beschichtung eine höhere WDD hat als die etwas hydrophobere Styrol/Acrylat-basierende, und dass diese verbessert durch Zugabe von Additiv 1. Dieser Effekt ist insbesondere für die hydrophobere Beschichtung auf Basis Beispiel 4 stärker.

**Tabelle 4: Definition der eingesetzten Rohstoffe**

| | |
|---|---|
| AMP^{®} 90 | Neutralisationsmittel der Fa. Angus Chemie GmbH |
| Byk^{®} 346 | Netzmittel der Fa. Byk Chemie GmbH |
| Tego Airex^{®} 901 | Entlufter der Fa. Degussa |
| Tego Foamex^{®} 810 | Entschäumer der Fa. Degussa |
| Dow Corning^{®} 51 | Benetzungsmittel der Dow Corning Corporation |
| Solvenon^{®} DPM | Lösemittel der Fa. BASF SE |
| Tinuvin^{®} 1130 | Lichtschutzmittel der Fa. Ciba Specialty Chemicals |
| Acematt^{®} TS 100 | Mattierungsmittel der Fa. Degussa |
| Collacral^{®} PU 75 | Verdicker der Fa. BASF SE |
| Viscoatex^{®} 730 | Verdicker der Fa. Coatex GmbH |
| Emulphor^{®} NPS 25 | Emulgator der Fa. BASF SE |
| Dowfax^{®} 2A1 | Emulgator der Dow Chemical Company |
| Lutensol^{®} TO 82 | Emulgator der Fa. BASF SE |
| Emulgator^{®} 825 | Emulgator der Fa. BASF SE |
| Emulan^{®} OG | Emulgator der Fa. BASF SE |
| Disponil^{®} FES 77 | Emulgator der Fa. Cognis GmbH |

## Patentansprüche

1. Wässrige Polymerisatdispersion P enthaltend 0,1 bis 10 Gew.-% Additive der allgemeinen Formel I 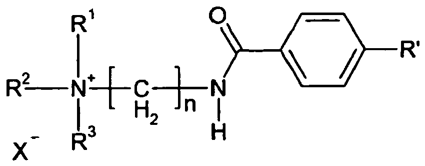 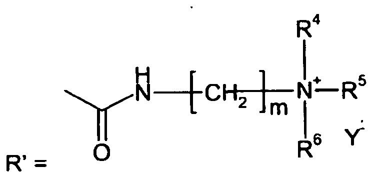 mit R¹, R², R³, R⁴, R⁵, R⁶ = H, C₁-Cₙ-Alkyl , wobei R¹ bis R⁶ sowohl gleich als auch verschieden sein können
X, Y = Cl, Br, I
und n,m = 1 - 8
wobei die wässrige Polymerisatdispersion erhältlich ist durch radikalische wässrige Emulsionspolymerisation einer Monomermischung, enthaltend
a) 45 bis 70 Gew.-Teile wenigstens eines Monomers, dessen Homopolymerisat eine Glasübergangstemperatur T_{g} < 20°C aufweist,
b) 30 bis 55 Gew.-Teilen wenigstens eines Monomers, dessen Homopolymerisat eine Glasübergangstemperatur T_{g} > 50°C aufweist, sowie
c) 0 bis 30 Gew.-Teile weiterer Monomere.

2. Wässrige Polymersatdispersion gemäß Anspruch 1, **dadurch gekennzeichnet, dass** die Monomere a) ausgewählt sind aus der Gruppe verzweigte und unverzweigte ethylenisch ungesättigte C₃-C₁₀-Olefine, C₁-C₁₀-Alkylacrylate, C₅-C₁₀-Alkylmethacrylate, C₅-C₁₀-Cycloalkyl(meth)acrylate, C₁-C₁₀-Dialkyl-maleinate und/oder C₁-C₁0-Dialkylfumarate.

3. Wässrige Polymerisatdispersion gemäß einem der Ansprüche 1 oder 2, **dadurch gekennzeichnet, dass** die Monomere b) ausgewählt sind aus der Gruppe Styrol, α-Methylstyrol, o- oder p-Vinyltoluol, Vinylchlorid, Vinylidenchlorid, Acrylnitril, Methacrylnitril, sowie (C₁-C₄)-Alkylester oder -Cycloalkylester der Methacrylsäure, oder Mischungen davon.

4. Wässrige Polymeriatdispersion gemäß einem der Ansprüche 1 bis 43, **dadurch gekennzeichnet, dass** die Monomere c) ausgewählt sind aus der Gruppe monoethylenisch ungesättigte Alkyl- oder Arylsulfonsäuren, sowie α,β-ungesättigte C₃-C₆-Carbonsäuren, α,β-ungesättigte C₄-C₈-Dicarbonsäuren oder deren Anhydriden, sowie die Alkalimetall- oder Ammoniumsalze der genannten Monomere.

5. Verfahren zur Herstellung einer wässrigen Polymeriatdispersion gemäß einem der Ansprüche 1 bis 4, **dadurch gekennzeichnet, dass** wenigstens ein Additiv der allgemeinen Formel I vor, während oder nach der Polymerisation zugegeben wird.

6. Verwendung der wässrigen Polymeriatdispersion gemäß einem der Ansprüche 1 bis 4 als Bindemittel für Anstrichmittel.

7. Verwendung der wässrigen Polymerisatdispersion gemäß einem der Ansprüche 1 bis 4 als Bindemittel für Holzbeschichtungen.

8. Verwendung gemäß Anspruch 6 oder 7, **dadurch gekennzeichnet, dass** das erfindungsgemäße Bindemittel eine Mindestfilmbildetemperatur unterhalb von 10°C aufweist.

9. Anstrichmittel enthaltend eine wässrige Polymerisatdispersion gemäß einem der Ansprüche 1 bis 4 als Bindemittel.

10. Holzbeschichtungsmittel enthaltend eine wässrige Polymerisatdispersion gemäß einem der Ansprüche 1 bis 4 als Bindemittel.

## Claims

1. An aqueous polymer dispersion P comprising 0.1% to 10% by weight of additives of the general formula I 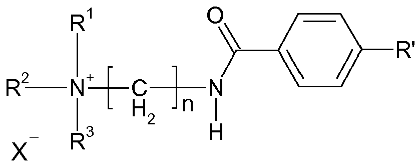 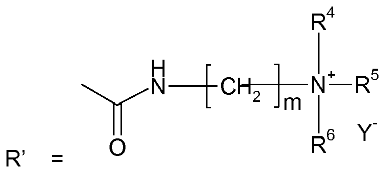 where R¹, R², R³, R⁴, R⁵, and R⁶ are H or C₁-Cₙ alkyl , it being possible for R¹ to R⁶ to be either identical or different,
X and Y are Cl, Br or I and
n and m are 1 - 8,
the aqueous polymer dispersion being obtainable by free-radical aqueous emulsion polymerization of a monomer mixture comprising
a) 45 to 70 parts by weight of at least one monomer whose homopolymer has a glass transition temperature Tg < 20°C,
b) 30 to 55 parts by weight of at least one monomer whose homopolymer has a glass transition temperature T_{g} > 50°C, and
c) 0 to 30 parts by weight of further monomers.

2. The aqueous polymer dispersion according to claim 1, wherein the monomers a) are selected from the group of branched and unbranched ethylenically unsaturated C₃-C₁₀ olefins, C₁-C₁₀ alkyl acrylates, C₅-C₁₀ alkyl methacrylates, C₅-C₁₀ cycloalkyl (meth)acrylates, C₁-C₁₀ dialkyl maleates and/or C₁-C₁₀ dialkyl fumarates.

3. The aqueous polymer dispersion according to either of claims 1 and 2, wherein the monomers b) are selected from the group of styrene, α-methylstyrene, o- or p-vinyltoluene, vinyl chloride, vinylidene chloride, acrylonitrile, methacrylonitrile, and also (C₁-C₄) alkyl esters or cycloalkyl esters of methacrylic acid, or mixtures thereof.

4. The aqueous polymer dispersion according to any of claims 1 to 3, wherein the monomers c) are selected from the group of monoethylenically unsaturated alkyl- or arylsulfonic acids, and also α,β-unsaturated C₃-C₆ carboxylic acids, α,β-unsaturated C₄-C₈ dicarboxylic acids or their anhydrides, and also the alkali metal salts or ammonium salts of said monomers.

5. A process for preparing an aqueous polymer dispersion according to any of claims 1 to 4, which comprises adding at least one additive of the general formula I before, during or after the polymerization.

6. The use of an aqueous polymer dispersion according to any of claims 1 to 4 as a binder for a coating material.

7. The use of an aqueous polymer dispersion according to any of claims 1 to 4 as a binder for a wood coating.

8. The use according to claim 6 or 7, wherein the binder of the invention has a minimum film formation temperature of below 10°C.

9. A coating material comprising an aqueous polymer dispersion according to any of claims 1 to 4 as binder.

10. A wood-coating material comprising an aqueous polymer dispersion according to any of claims 1 to 4 as binder.

## Revendications

1. Dispersion aqueuse de polymère P contenant 0,1 à 10% en poids d'additifs de formule générale I 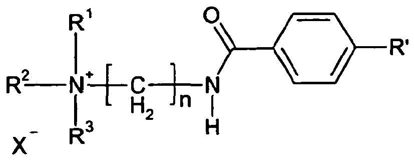 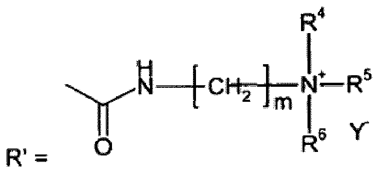 avec R¹, R², R³, R⁴, R ⁵ R⁶ = H, C₁-Cₙ-alkyle, R¹ à R⁶ pouvant être tant identiques que différents X, Y = Cl, Br, I et
n, m = 1-8
la dispersion aqueuse de polymère pouvant être obtenue par une polymérisation en émulsion aqueuse par voie radicalaire d'un mélange de monomères, contenant
a) 45 à 70 parties en poids d'au moins un monomère dont l'homopolymère présente une température de transition vitreuse Tg < 20°C,
b) 30 à 55 parties en poids d'au moins un monomère dont l'homopolymère présente une température de transition vitreuse Tg > 50°C, ainsi que
c) 0 à 30 parties en poids d'autres monomères.

2. Dispersion aqueuse de polymère selon la revendication 1, **caractérisée en ce que** les monomères a) sont choisis dans le groupe des C₃-C₁₀-oléfines ramifiées et non ramifiées, éthyléniquement insaturées, des acrylates de C₁-C₁₀-alkyle, des méthacrylates de C₅-C₁₀-alkyle, des (méth)acrylates de C₅-C₁₀-cycloalkyle, des maléinates de C₁-C₁₀-dialkyle et/ou des fumarates de C₁-C₁₀-dialkyle.

3. Dispersion aqueuse de polymère selon l'une quelconque des revendications 1 ou 2, **caractérisée en ce que** les monomères b) sont choisis dans le groupe formé par le styrène, l'α-méthylstyrène, l'o-vinyltoluène ou le p-vinyltoluène, le chlorure de vinyle, le chlorure de vinylidène, l'acrylonitrile, le méthacrylonitrile, ainsi que les esters (C₁-C₄)-alkyliques ou cycloalkyliques de l'acide méthacrylique, ou leurs mélanges.

4. Dispersion aqueuse de polymère selon l'une quelconque des revendications 1 à 3, **caractérisée en ce que** les monomères c) sont choisis dans le groupe des acides alkylsulfoniques ou arylsulfoniques éthyléniquement monoinsaturés, ainsi que les acides C₃-C₆-carboxyliques α,β-insaturés, les acides C₄-C₈-dicarboxyliques α,β-insaturés ou leurs anhydrides ainsi que les sels de métal alcalin ou d'ammonium des monomères mentionnés.

5. Procédé pour la préparation d'une dispersion aqueuse de polymère selon l'une quelconque des revendications 1 à 4, **caractérisé en ce qu'**au moins un additif de formule générale I est ajouté avant, pendant ou après la polymérisation.

6. Utilisation de la dispersion aqueuse de polymère selon l'une quelconque des revendications 1 à 4 comme liant pour peintures.

7. Utilisation de la dispersion aqueuse de polymère selon l'une quelconque des revendications 1 à 4 comme liant pour revêtements pour bois.

8. Utilisation selon la revendication 6 ou 7, **caractérisée en ce que** le liant selon l'invention présente au moins une température minimale de formation de film inférieure à 10°C.

9. Peinture contenant une dispersion aqueuse de polymère selon l'une quelconque des revendications 1 à 4 comme liant.

10. Agent de revêtement de bois contenant une dispersion aqueuse de polymère selon l'une quelconque des revendications 1 à 4 comme liant.
